# EUROPEAN PATENT SPECIFICATION

(11) **EP 4 456 642 B1**
(45) Date of publication and mention of the grant of the patent: **02.09.2026**
(21) Application number: 22910569.7
(22) Date of filing: 25.10.2022
(51) Int. Cl.: H04L 5/14, H04W 28/06, H04W 48/18, H04W 72/0446

(54) **COMMUNICATION DEVICE AND METHOD, AND PROGRAM**
KOMMUNIKATIONSVORRICHTUNG UND -VERFAHREN SOWIE PROGRAMM
DISPOSITIF ET PROCÉDÉ DE COMMUNICATION, ET PROGRAMME

(30) Priority: 21.12.2021 JP 2021207377
(43) Date of publication of application: 30.10.2024
(73) Proprietor: CANON KABUSHIKI KAISHA, Tokyo 146-8501 (JP)
(72) Inventor: NAKAJIMA, Takafumi, Tokyo 146-8501 (JP); SAKAI, Tatsuhiko, Tokyo 146-8501 (JP)
(74) Representative: Canon Europe Limited
(86) International application number: PCT/JP2022/039676
(87) International publication number: WO 2023/119848

(56) References cited:
- WO-A1-2017/168112
- JP-A- 2016 537 859
- US-A1- 2016 219 597
- US-A1- 2020 367 063
- US-A1- 2021 321 416
- US-A1- 2021 377 945

## Description

### TECHNICAL FIELD

The present invention relates to the operation of a base station in a Time Division Duplex (TDD) communication system and in particular to a communication apparatus, a method and a program.

### BACKGROUND ART

A base station (carrier network base station) in a Time Division Duplex (TDD) communication system constructed by a public telecommunications carrier (carrier) is operated by synchronizing the TDD patterns of respective base stations with each other to prevent interference with an adjacent base station. The TDD pattern is a pattern that defines uplink/downlink timings in TDD slots operated by each base station.

On the other hand, in recent years, institutionalization for a carrier other than a public telecommunications carrier to construct and operate a cellular communication network such as a local 5G or a regional BWA (Broadband Wireless Access) has been promoted. A base station (local network base station) installed by a carrier other than a public telecommunications carrier may perform communication, such as low-latency communication or high-speed uplink communication, of a pattern different from that of a carrier network base station that mainly performs high-speed downlink communication. In this case, TDD UL/DL patterns do not match between the local network base station and the carrier network base station. Therefore, in a case where the carrier network base station and the local network base station that are geographically adjacent to each other are operated in adjacent frequency bands, interference may occur due to a mismatch between the TDD patterns, thereby degrading performance.

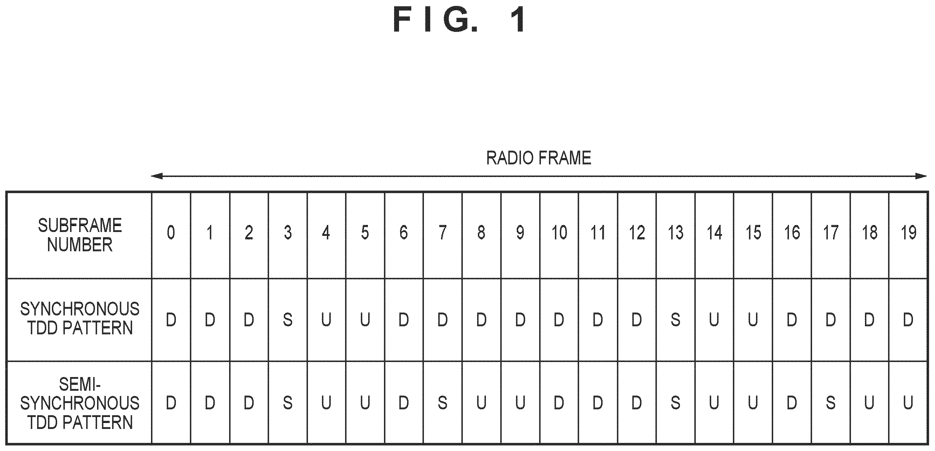

To cope with this, it has been examined to introduce a semi-synchronous TDD pattern for preventing interference between the carrier network base station and its adjacent local network base station (PTL 1). The semi-synchronous TDD pattern is obtained by replacing, by uplink subframes, some downlink subframes of the TDD pattern of a predetermined base station (synchronous base station) during a synchronous operation (Fig. 1). Fig. 1 shows the type of each of a plurality of subframes (slots) included in one radio frame. "D" represents a downlink (from a base station to a terminal), "U" represents an uplink (from a terminal to a base station), and "S" represents a special slot including a switching period from D to U. In a case where the local network base station uses such semi-synchronous TDD pattern, it is possible to prevent at least the local network base station from interfering with the carrier network base station.

US patent application publication no. US2020/367063 describes a shared frequency management apparatus which includes a communicator receiving application information regarding use of a shared frequency band from each of base stations of plural different communication companies, a determiner determining whether or not allocation of different TDD patterns during use of adjacent carrier frequencies among plural carrier frequencies included in the shared frequency band is possible on the basis of the application information from each base station, a setter setting the TDD pattern for each of the carrier frequencies on the basis of the application information from each base station and a determination result of whether or not allocation of the different TDD patterns is possible, and a decision unit deciding an allocation content of the shared frequency band to each base station, satisfying the application information from each base station, on the basis of a setting result of the TDD pattern for each carrier frequency.

US patent application publication no. US2021/321416 describes methods, systems, and devices for wireless communications that support asymmetric time division duplexing (TDD) coexistence among different operators having adjacent nodes in wireless networks. A baseline TDD configuration may be established for a set of frequency bands, that provides that uplink (UL) transmissions and downlink (DL) transmissions within a set of frequency bands are aligned and result in relatively little or no interference among different operators. An operator may determine that a TDD configuration that is different from the baseline TDD configuration may be beneficial and may select an interference mitigation procedure and communicate with one or more UEs using the interference mitigation procedure and TDD configuration that is different than the baseline TDD configuration.

US patent application publication no. US2016/219597 describes systems and methods for improved interference management by Wi-Fi devices. The interference management may be achieved by monitoring, by the Wi-Fi device, signaling energy on a communication channel in a frequency band associated with the Wi-Fi device, comparing the monitored signal energy with a known waveform signature corresponding to Long Term Evolution (LTE) operation, and identifying a presence of an LTE interferer on the communication channel in the frequency band associated with the Wi-Fi device based on the comparison.

US patent application publication no. US2021/377945 describes a communication apparatus for facilitating setting up of a network slice for service provision in a time division duplex system includes a receiver configured to receive a request for a network slice for at least one service. A processor is configured to specify, for the requested network slice, at least one of an uplink/downlink (UL/DL) configuration and a reconfiguration timescale. A transmitter is configured to notify at least one of a communication entity of a radio access network and a communication entity of a core network of the UL/DL configuration.

### CITATION LIST

### PATENT LITERATURE

PTL 1: Japanese Patent Laid-Open No. 2020-188388

### SUMMARY OF INVENTION

### TECHNICAL PROBLEM

In the above-described examination of the semi-synchronous TDD pattern, it is assumed that a synchronous base station in a carrier network uses a fixed TDD pattern, and a case where the synchronous base station changes the TDD pattern is not examined. Furthermore, when the synchronous base station changes the TDD pattern, interference with another base station, which does not occur at the time of a synchronous operation, occurs. Therefore, it is difficult for the synchronous base station to change the TDD pattern.

The present invention has been made in consideration of the above problem, and provides a technique of allowing a more efficient operation of a TDD communication system.

### SOLUTION TO PROBLEM

In accordance with one aspect of the present invention, there is provided a communication apparatus according to claim 1 of the accompanying claims.

In accordance with another aspect of the present invention, there is provided a method according to claim 12 of the accompanying claims.

In accordance with another aspect of the present invention, there is provided a program according to claim 16 of the accompanying claims.

### ADVANTAGEOUS EFFECTS OF INVENTION

According to the present invention, it is possible to provide a technique of allowing a more efficient operation of a TDD communication system. Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view for explaining a semi-synchronous TDD pattern;
Fig. 2 is a block diagram showing the hardware arrangement of a base station apparatus;
Fig. 3 is a block diagram showing the software function of the base station apparatus according to the first embodiment;
Fig. 4 is a table showing an example of a TDD pattern corresponding table;
Fig. 5 is a table showing an example of a terminal list;
Fig. 6 is a view showing the overall configuration of a network according to the first embodiment;
Fig. 7 is an operation flowchart of TDD pattern setting processing according to the first embodiment;
Fig. 8 is a sequence chart showing an operation sequence according to the first embodiment;
Fig. 9 is a view showing an example of determination of an operation TDD pattern;
Fig. 10 is a block diagram showing the software function of a base station apparatus according to the second embodiment;
Fig. 11 is a view showing the overall configuration of a network according to the second embodiment;
Fig. 12 is an operation flowchart of TDD pattern setting processing according to the second embodiment;
Fig. 13 is a sequence chart showing an operation sequence according to the second embodiment; and
Fig. 14 is a view showing a plurality of TDD patterns serving as operation TDD patterns.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (First Embodiment)

As the first embodiment of a communication apparatus according to the present invention, a base station apparatus as a communication apparatus that operates as a base station in a Time Division Duplex communication system (TDD communication system) will be exemplified below.

### <Apparatus Arrangement and System Configuration>

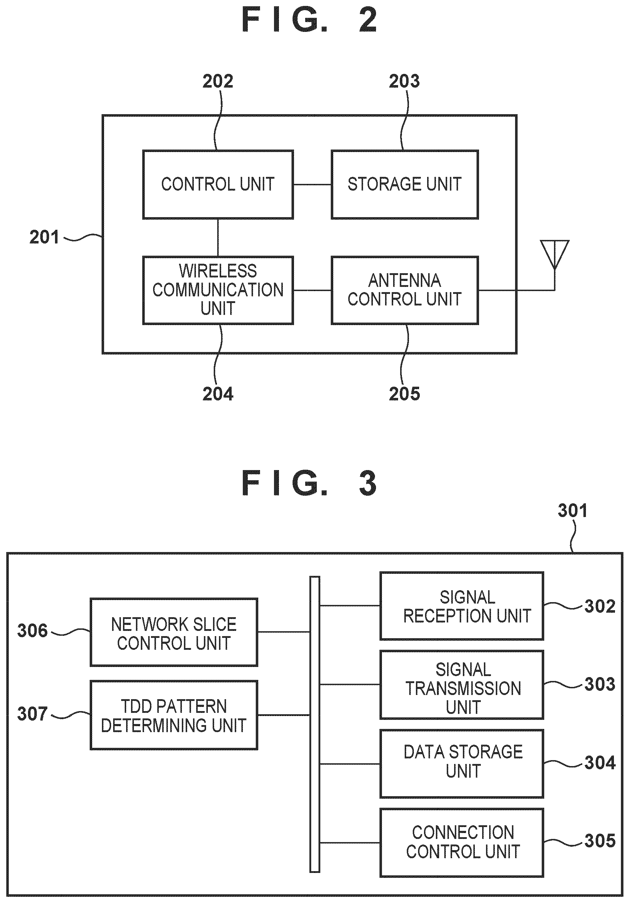

Fig. 2 is a block diagram showing the hardware arrangement of a base station apparatus 201. The base station apparatus 201 includes a control unit 202, a storage unit 203, a wireless communication unit 204, and an antenna control unit 205.

The control unit 202 controls the overall apparatus by executing control programs stored in the storage unit 203. The storage unit 203 stores the control programs to be executed by the control unit 202 and various kinds of information (a plurality of predetermined usable TDD patterns, connection terminal information, network slice information, and the like). Various kinds of operations to be described later are performed when the control unit 202 executes the control programs stored in the storage unit 203.

The wireless communication unit 204 performs cellular network communication such as LTE or 5G communication complying with the 3GPP (3rd Generation Partnership Project) standard. The antenna control unit 205 controls an antenna for wireless communication performed by the wireless communication unit 204.

Fig. 3 is a block diagram showing the software function of the base station apparatus according to the first embodiment. A communication apparatus function 301 includes a signal reception unit 302, a signal transmission unit 303, a data storage unit 304, a connection control unit 305, a network slice control unit 306, and a TDD pattern determination unit 307.

The signal reception unit 302 and the signal transmission unit 303 perform, with a terminal apparatus, cellular network communication such as LTE or 5G communication complying with the 3GPP standard. The data storage unit 304 stores and holds software programs and information such as a TDD pattern corresponding table and terminal list (to be described later).

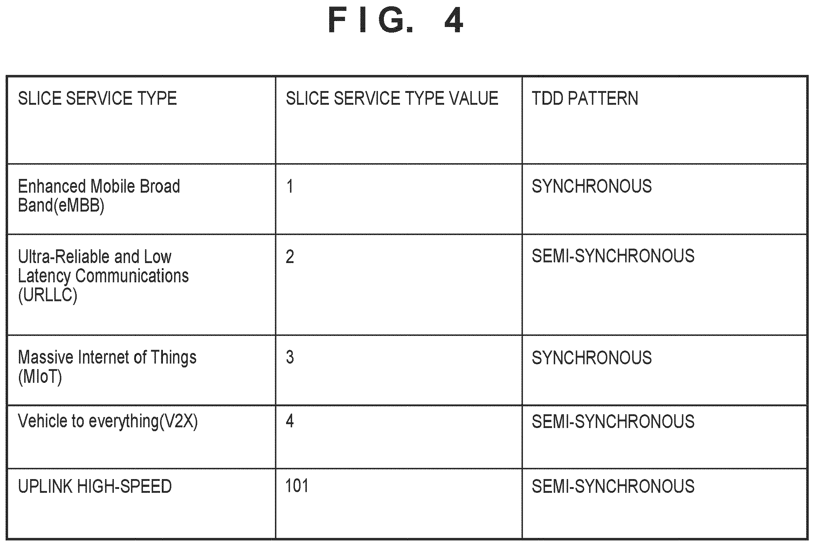

Fig. 4 is a table showing an example of the TDD pattern corresponding table. The TDD pattern corresponding table is stored in the data storage unit 304. The TDD pattern corresponding table indicates the correspondence between a service type value and its associated TDD pattern in correspondence with each of a plurality of network slice service types usable in the base station.

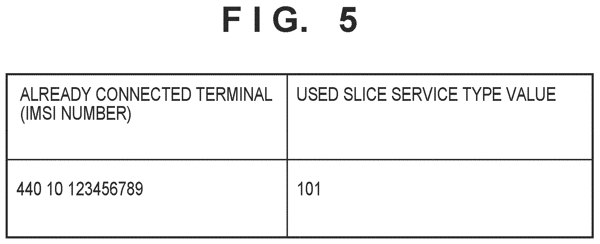

Fig. 5 is a table showing an example of the terminal list. The terminal list is stored in the data storage unit 304. The terminal list associates identification information of a terminal currently connected to the base station with the service type value of a network slice used by the terminal. In this example, as information for identifying a terminal in a network, an IMSI (International Mobile Subscriber Identity) is used. The IMSI is a number that is stored in a SIM (Subscriber Identity Module) and used to identify a subscriber. Other information may be used as long as it can be used to uniquely identify a terminal.

The connection control unit 305 performs processing concerning connection and disconnection of a terminal to and from a cellular network, such as RRC (Radio Resource Control) message communication performed with the terminal or a core network function.

Using the terminal list (Fig. 5) stored in the data storage unit 304, the network slice control unit 306 manages information concerning a network slice used by a terminal connected to the base station. For example, when a terminal is connected to the base station, the network slice control unit 306 receives a connection notification from the connection control unit 305, and then registers, in the terminal list, identification information of the connection terminal and the service type value of a network slice used by the connection terminal. When the connection terminal is disconnected from the base station, the network slice control unit 306 receives a disconnection notification from the connection control unit 305, and then deletes the information concerning the disconnected connection terminal from the terminal list.

At the time of terminal connection, the TDD pattern determination unit 307 determines an operation TDD pattern in TDD pattern setting processing (to be described later), and notifies the connection control unit of the terminal of the determined TDD pattern.

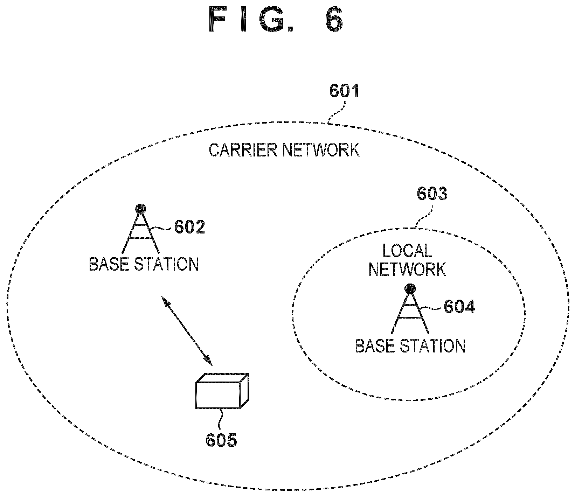

Fig. 6 is a view showing the overall configuration of a network according to the first embodiment. In this embodiment, in the service area (communication range) of a carrier network 601, a base station 602 is arranged as a facility forming the carrier network 601. In addition, in the communication range of the carrier network 601, the service area of a local network 603 exists. In the service area of the local network 603, a base station 604 is arranged as a facility forming the local network 603. A terminal 605 is a terminal that can be connected to the carrier network 601 to perform communication, and includes subscriber information (IMSI) necessary for connection to the carrier network 601.

In the carrier network 601, services of slice service types shown in Fig. 4 can be used. The base station 602 stores the TDD pattern corresponding table (Fig. 4) in the data storage unit 304. When the terminal 605 is connected to the carrier network 601, it is assumed to use Ultra-Reliable and Low Latency Communications (URLLC) service (the service type value is "2") using a semi-synchronous TDD pattern.

Note that the carrier network 601 constructed by the base station 602 and the local network 603 constructed by the base station 604 are operated in adjacent frequency bands. For example, a radio wave in the 4.5-GHz band is used in the carrier network 601, and a radio wave in the 4.6-GHz band is used in the local network 603.

### <Operation of Apparatus>

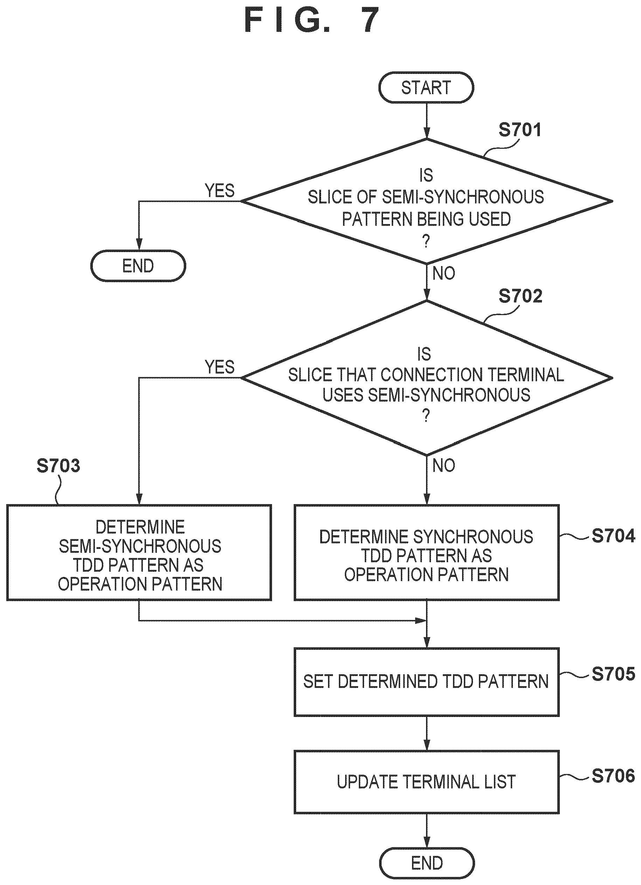

Fig. 7 is an operation flowchart of TDD pattern setting processing according to the first embodiment. The TDD pattern setting processing is processing performed by the base station 602, and is started by the connection control unit 305 when a terminal is connected to the base station 602. The TDD pattern setting processing is implemented when the control unit 202 reads out a computer program stored in the storage unit 203 and executes it.

In step S701, the connection control unit 305 confirms the presence/absence of a terminal that currently uses a slice service using a semi-synchronous TDD pattern by referring to the terminal list and TDD pattern corresponding table stored in the data storage unit 304.

If there exists a terminal that currently uses a slice service using a semi-synchronous TDD pattern (YES in step S701), the connection control unit 305 ends the processing, and the base station continues an operation using the semi-synchronous TDD pattern. On the other hand, if there is no terminal that currently uses a slice service using a semi-synchronous TDD pattern (NO in step S701), the connection control unit 305 instructs the TDD pattern determination unit 307 to determine an operation TDD pattern. Note that when the connection control unit 305 issues the instruction to the TDD pattern determination unit 307, it also notifies the TDD pattern determination unit 307 of a service type value used by the connection terminal. Note also that the connection control unit 305 obtains the service type value used by the connection terminal by referring to an NSSAI value in an RRC Connection Complete message received from the terminal at the time of terminal connection. NSSAI is Network Slice Selection Assistance Information.

In step S702, upon receiving the instruction from the connection control unit 305, the TDD pattern determination unit 307 confirms the TDD pattern of the network slice used by the connection terminal. More specifically, the TDD pattern determination unit 307 confirms the TDD pattern of the network slice used by the connection terminal by referring to the TDD pattern corresponding table based on the service type value notified from the connection control unit 305. If the TDD pattern of the network slice is a semi-synchronous TDD pattern, the process advances to step S703. If the TDD pattern of the network slice is a synchronous TDD pattern, the process advances to step S704.

In step S703, the TDD pattern determination unit 307 determines "semi-synchronous TDD pattern" as the operation TDD pattern, and notifies the connection control unit 305 of the result. On the other hand, in step S704, the TDD pattern determination unit 307 determines "synchronous TDD pattern" as the operation TDD pattern, and notifies the connection control unit 305 of the result.

In step S705, upon receiving the notification from the TDD pattern determination unit 307, the connection control unit 305 sets the determined operation TDD pattern in the wireless communication unit 204 (the signal reception unit 302 and the signal transmission unit 303). The wireless communication unit 204 notifies the currently connected terminal of the set TDD pattern, and then changes the operation to the set TDD pattern.

In step S706, the connection control unit 305 transmits a connection notification to the network slice control unit 306, and updates contents of the terminal list. After that, the connection control unit 305 ends the processing.

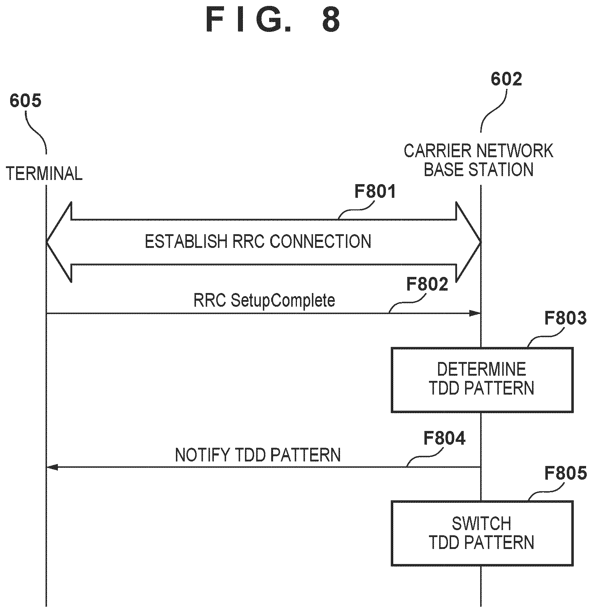

Fig. 8 is a sequence chart showing an operation sequence according to the first embodiment. More specifically, Fig. 8 shows the sequence of a processing operation performed when the terminal 605 currently connected to the carrier network 601 is connected to the base station 602.

The terminal 605 establishes RRC connection to the base station 602 (F801). After that, the terminal 605 transmits, to the base station 602, an RRC Connection Complete message including the service type value (for example, NSSAI) of a network slice used (F802).

Upon receiving the message, the base station 602 activates the TDD pattern setting processing (Fig. 7). In this example, since the terminal 605 uses a URLLC service (the service type value is "2"), "semi-synchronous TDD pattern" is determined as the operation TDD pattern (F803).

The base station 602 notifies the terminal 605 of the determined TDD pattern (F804). After that, the base station 602 switches the operation TDD pattern to "semi-synchronous TDD pattern" (F805).

With the above procedure, the base station 602 can change the TDD pattern to "synchronous TDD pattern" or "semi-synchronous TDD pattern" in accordance with the network slice used by the terminal 605. This enables the base station 602 to use the TDD pattern suitable for the service without interfering with another base station.

Note that this embodiment has explained a case where the terminal 605 uses URLLC as a slice service. However, when using another slice service, "semi-synchronous TDD pattern" may be set. For example, "uplink high-speed service" that provides an uplink speed higher than in an enhanced Mobile Broadband (eMBB) slice service may be defined, and "semi-synchronous TDD pattern" may be set at the time of use of this service.

In the TDD pattern setting processing (Fig. 7), it has been described that the base station sets one of "synchronous TDD pattern" and "semi-synchronous TDD pattern" as the operation TDD pattern. However, a TDD pattern other than these patterns may be set. For example, the base station may determine another operation TDD pattern based on the synchronous TDD pattern and the semi-synchronous TDD pattern.

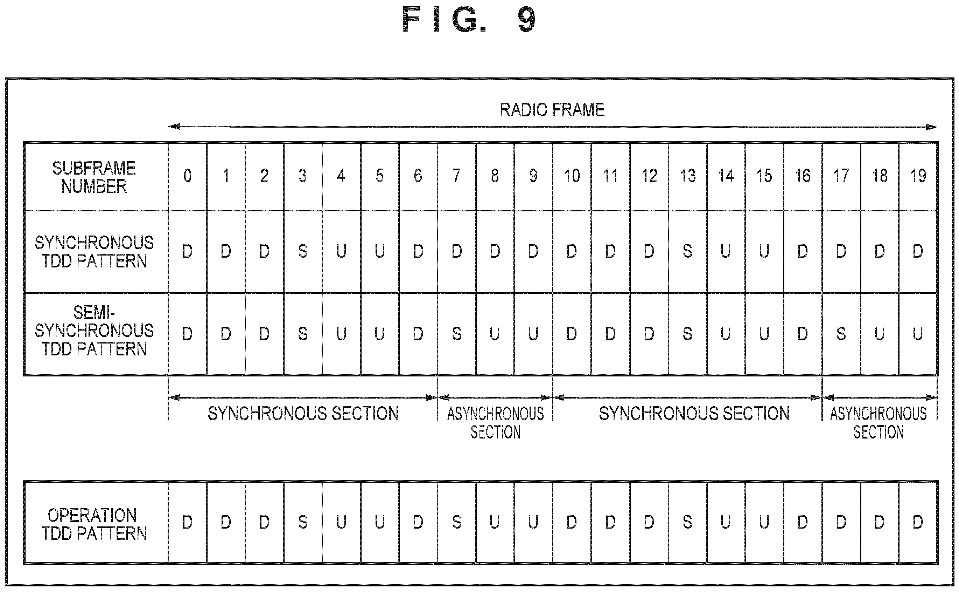

Fig. 9 is a view showing an example of the determination of the operation TDD pattern. First, the base station determines, as "synchronous section", a section in which the subframe types of the stored "synchronous TDD pattern" and "semi-synchronous TDD pattern" are the same, and determines, as "asynchronous section", a section in which the subframe types are different. After that, the base station sets, as the operation TDD pattern, a TDD pattern in which subframe types in "asynchronous section" are arbitrarily set.

By using the operation TDD pattern set as described above, the synchronous base station can use the TDD pattern suitable for the service without interfering with another synchronous base station or receiving interference from a semi-synchronous base station.

As described above, according to the first embodiment, the synchronous base station changes the operation TDD pattern in accordance with the network slice used by the terminal. By setting the operation TDD pattern based on the synchronous TDD pattern and the semi-synchronous TDD pattern, the synchronous base station can use a more efficient TDD pattern without interfering with another synchronous base station or receiving interference from the semi-synchronous base station.

### (Second Embodiment)

The first embodiment has explained a case where the base station 602 in the carrier network switches the TDD pattern in accordance with the network slice used by the connection terminal 605. However, when the base station 602 operates by switching the TDD pattern, the base station 604 in the local network may also operate by switching the TDD pattern. In this case, depending on the selected TDD pattern, the base station 604 may interfere with the base station 602.

For example, consider a case where the base station 604 selects the synchronous TDD pattern shown in Fig. 1 in a state in which the base station 602 sets the semi-synchronous TDD pattern shown in Fig. 1. In this case, in the TDD pattern of the base station 602, frames of "U" are set in slots of subframe numbers of 8, 9, 18, and 19. To the contrary, frames of "D" are set in corresponding slots in the base station 604. If communication is performed in this state, a radio wave of the base station 604 may interfere with the base station 602 in these slots.

The base station 604 in the local network voluntarily takes measures not to interfere with the base station 602 in the carrier network. The second embodiment will describe a form in which a base station 604 in a local network sets a TDD pattern not to interfere with a base station 602 in a carrier network.

### <Apparatus Arrangement and System Configuration>

A block diagram of the hardware arrangement of the local base station 604 is the same as that shown in Fig. 2 and a detailed description thereof will be omitted. In addition to the explanation of Fig. 2, an antenna control unit 205 according to this embodiment is configured to communicate, in a frequency band adjacent to the frequency band of a cell constructed by the self-apparatus, with another base station operating in the adjacent frequency band. Along with this, an antenna is also configured to perform communication in the adjacent frequency band. Note that it may be configured to cover both the frequency band of the self-apparatus and the adjacent frequency band by one RF circuit or to provide an RF circuit for each frequency band.

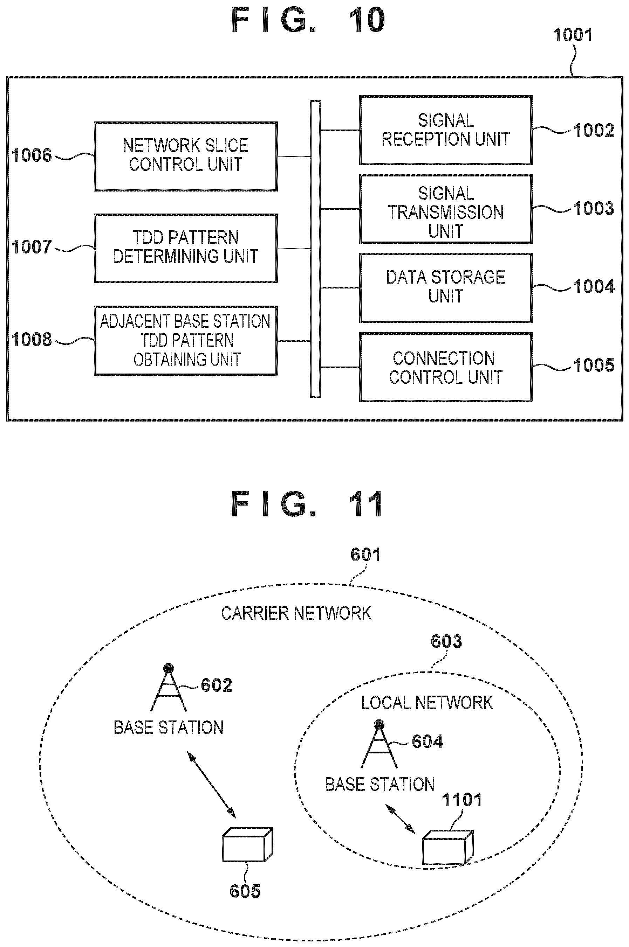

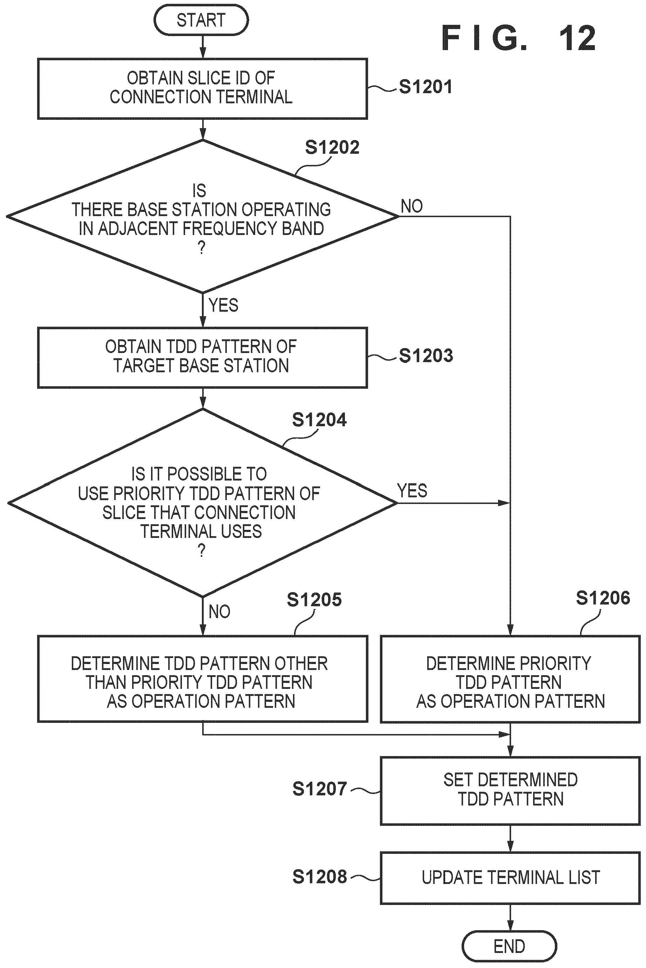

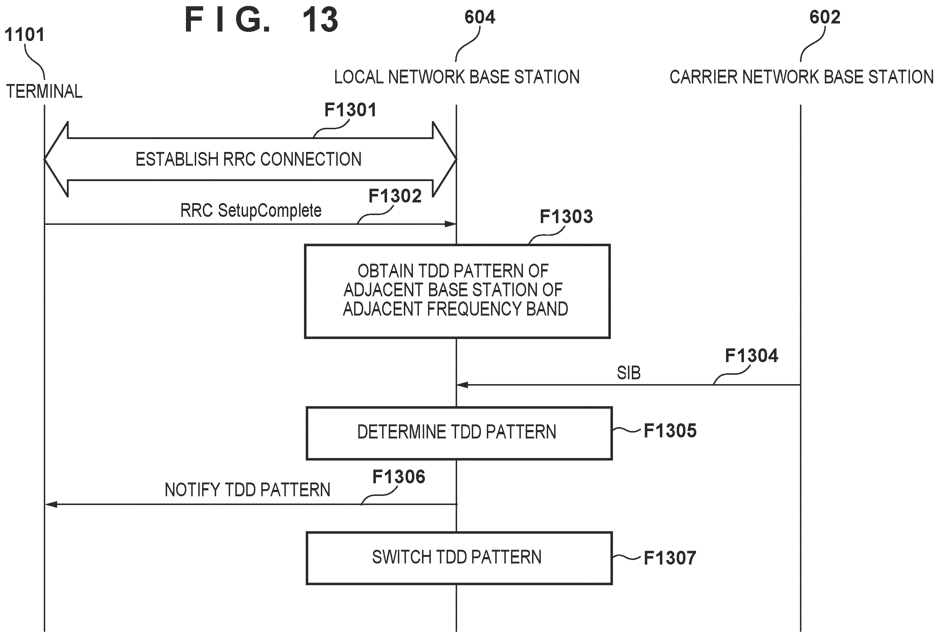

Fig. 10 is a block diagram showing the software function of a base station apparatus according to the second embodiment. A communication apparatus function 1001 includes a signal reception unit 1002, a signal transmission unit 1003, a data storage unit 1004, a connection control unit 1005, a network slice control unit 1006, a TDD pattern determination unit 1007, and a TDD pattern obtaining unit 1008. The signal reception unit 1002 to the TDD pattern determination unit 1007 are the same blocks as the signal reception unit 302 to the TDD pattern determination unit 307 shown in Fig. 3, respectively, and a description thereof will be omitted. The TDD pattern obtaining unit 1008 obtains the TDD pattern of an adjacent base station. More specifically, processing of obtaining "the TDD pattern of another base station operating in the adjacent frequency band" to be used by the TDD pattern determination unit 1007 to determine the TDD pattern is performed. Details of the obtaining processing will be described later with reference to Figs. 12 and 13.

Fig. 11 is a view showing the overall configuration of a network according to the second embodiment. In this embodiment, in addition to the configuration shown in Fig. 6, a terminal 1101 that is connected to a local network 603 to perform communication is included. The terminal 1101 has subscriber information (IMSI) necessary for connection to the local network 603.

In this embodiment, in the local network 603 as well, services of slice service types shown in Fig. 4 can be used, and the base station 604 in the local network 603 stores, in a data storage unit 304, a TDD pattern corresponding table shown in Fig. 4. Note that the TDD pattern need not be the same slice service type as in the carrier network 601. A unique slice service type may be used in the local network 603. However, for the sake of descriptive simplicity, assume that the slice service types shown in Fig. 4 are used in the following description.

This embodiment assumes that a TDD pattern indicated in an item "TDD pattern" in Fig. 4 is "priority TDD pattern" that is preferentially used. If, as a result of TDD pattern judgement processing (to be described later), it is judged that the "priority TDD pattern" cannot be used, another TDD pattern is used. Details will be described later with reference to Fig. 12.

Assume also that when connected to the local network 603, the terminal 1101 uses an eMBB service (the service type value is "1") using a semi-synchronous TDD pattern. Note that as a synchronous TDD pattern and a semi-synchronous TDD pattern according to this embodiment, patterns shown in Fig. 1 or 9 are used.

### <Operation of Apparatus>

Fig. 12 is an operation flowchart of TDD pattern setting processing according to the second embodiment. The TDD pattern setting processing is processing performed by the base station 604 in the local network 603, and is started by a connection control unit 305 when a terminal is connected to the base station 604. The TDD pattern setting processing is implemented when a control unit 202 reads out a computer program stored in a storage unit 203 and executes it.

After the start of the processing, the connection control unit 1005 instructs the TDD pattern determination unit 1007 to determine an operation TDD pattern. Note that when the connection control unit 1005 issues the instruction to the TDD pattern determination unit 1007, it also notifies the TDD pattern determination unit 1007 of a service type value used by the connection terminal. Note also that the connection control unit 1005 obtains the service type value used by the connection terminal by referring to an NSSAI value in an RRC Connection Complete message received from the terminal at the time of terminal connection.

In step S1201, after receiving the instruction from the connection control unit 1005, the TDD pattern determination unit 1007 confirms the TDD pattern of a network slice used by the connection terminal. More specifically, the TDD pattern determination unit 1007 confirms the TDD pattern of the network slice used by the connection terminal by referring to the TDD pattern corresponding table based on the service type value notified from the connection control unit 1005.

In step S1202, the TDD pattern determination unit 1007 instructs the TDD pattern obtaining unit 1008 to obtain the TDD pattern of a base station operating in an adjacent frequency band. After receiving the instruction from the TDD pattern determination unit 1007, the TDD pattern obtaining unit 1008 performs processing of judging whether there exists a base station operating in the adjacent frequency band. If there exists a base station operating in the adjacent frequency band, the process advances to step S1203. If there is no base station operating in the adjacent frequency band, the process advances to step S1206.

Whether there exists another base station operating in the adjacent frequency band is judged in accordance with whether a signal sent by another base station in the frequency band adjacent to the frequency band of a cell constructed by the self-base station is received. Judgement of whether there exists another base station operating in the adjacent frequency band is not limited to this. The self-apparatus may obtain information via a network-side apparatus, or may request the connection terminal to collect information concerning the adjacent base station and make a notification of it, and then obtain the information.

Note that the adjacent frequency band is an adjacent frequency band in which the self-base station may interfere with another base station, and a frequency band in which the self-base station interferes with another base station is stored in advance as a predetermined frequency band in a storage unit. Alternatively, in a case where the base station receives a radio wave from another base station, calculates the degree of interference based on the radio wave intensity of the self-apparatus, and judges to interfere with the other base station, the frequency band may be included as an adjacent frequency band.

Furthermore, judgement of whether the base station operating in the adjacent frequency band is in the carrier network may be added. If the base station is in the carrier network, it is judged that there exists a base station operating in the adjacent frequency band. If the base station is not in the carrier network, it is judged that there is no base station operating in the adjacent frequency band. Whether the base station is in the carrier network is judged by receiving a notification signal transmitted from another base station and using a PLMNID (Public Land Mobile Network Identifier) included in the notification signal. Note that a method of judging whether the base station is in the carrier network is not limited to this.

In step S1203, the TDD pattern obtaining unit 1008 performs processing of obtaining the TDD pattern of the other base station operating in the adjacent frequency band. For example, the TDD pattern can be obtained from information included in an SIB (System Information Block) notified from the other base station operating in the adjacent frequency band. There are some types of SIBs, and the TDD pattern can be obtained from an information element "TDD UL/DL Configuration" included in SIB1 (System Information Block Type1). Note that obtaining of the TDD pattern is not limited to this. The self-apparatus may obtain the information via a network-side apparatus, or may request the connection terminal to collect information concerning the adjacent base station and make a notification of it, and then obtain the information. Alternatively, a signal for exchanging the TDD pattern may be defined between the base stations, and the TDD pattern may be obtained based on the signal.

In this embodiment, the TDD pattern obtaining unit 1008 obtains the TDD pattern of the base station 602 in the carrier network. The TDD pattern obtaining unit 1008 sends the obtained TDD pattern to the TDD pattern determination unit 1007. After the TDD pattern determination unit 1007 receives the TDD pattern from the TDD pattern obtaining unit 1008, the process advances to step S1204. Note that if the TDD pattern cannot be obtained, it may be judged not to use, in the TDD pattern determination unit 1007, the TDD pattern that may interfere with the carrier network, and to use another TDD pattern.

In step S1204, the TDD pattern determination unit 1007 judges whether the priority TDD pattern can be used for the slice service used by the connection terminal. Whether the priority TDD pattern can be used is judged based on the TDD pattern corresponding table (Fig. 4) and the TDD pattern of the base station in the adjacent frequency band collected in step S1203. If it is judged that the priority TDD pattern can be used, the process advances to step S1206. If it is judged that the priority TDD pattern cannot be used, the process advances to step S1205.

For example, in this embodiment, the terminal 1101 uses the eMBB service (the service type value is "1"), and temporarily selects "synchronous TDD pattern) as the priority TDD pattern. To the contrary, the TDD pattern of the base station in the adjacent frequency band is the TDD pattern of the base station 602 in the carrier network, and is "semi-synchronous TDD pattern". In this case, if the base station 604 in the local network selects "synchronous TDD pattern" as the priority TDD pattern, this interferes with the base station 602 in the carrier network in the subframes in an asynchronous section. Therefore, the TDD pattern determination unit 1007 judges that the base station 604 in the local network cannot use the priority TDD pattern. To the contrary, for example, if the TDD pattern of the base station in the adjacent frequency band is "synchronous TDD pattern", it is judged that the synchronous TDD pattern as the priority TDD pattern can be used.

As another example, a case where the connection terminal 1101 uses an uplink high-speed service (the service type value is "101") will be described. First, "semi-synchronous TDD pattern" as the priority TDD pattern of the uplink high-speed service is temporarily selected. In this case, even if the TDD pattern of the carrier network as the base station in the adjacent frequency band is either "synchronous TDD pattern" or "semi-synchronous TDD pattern", if the base station 604 uses the semi-synchronous TDD pattern, this does not interfere with the base station 602. Therefore, the TDD pattern determination unit 1007 judges that the base station 604 in the local network can use "semi-synchronous TDD pattern" as the priority TDD pattern.

As described above, it may be known that the priority TDD pattern of the service type value of the connection terminal does not cause interference (regardless of the TDD pattern of the base station operating in the adjacent frequency band). In this case, it may be judged that the priority TDD pattern can be used by skipping the TDD pattern obtaining processing (steps S1202 and S1203) operating in the adjacent frequency band. The case where it is known that the priority TDD pattern does not cause interference is, for example a case where a TDD pattern in which frames in an asynchronous section are all "U" is used.

In step S1205, the TDD pattern determination unit 1007 determines to use "another TDD pattern different from the priority TDD pattern" as the operation TDD pattern of the base station 604. In this embodiment, it is determined to use "semi-synchronous TDD pattern" as another TDD pattern. Note that this embodiment describes a case where one synchronous TDD pattern and one semi-synchronous TDD pattern are used. That is, there may exist a plurality of synchronous TDD patterns and/or a plurality of semi-synchronous TDD patterns. In this case, in step S1205, a TDD pattern that does not interfere with the TDD pattern of the base station operating in the adjacent frequency band is selected. After a TDD pattern is determined in step S1205, the process advances to step S1207.

In step S1206, the TDD pattern determination unit 1007 determines to use "priority TDD pattern" as the operation TDD pattern of the self-base station, and notifies the connection control unit 305 of the result.

In step S1207, upon receiving the notification from the TDD pattern determination unit 1007, the connection control unit 1005 sets the determined operation TDD pattern in the wireless communication unit 204 (the signal reception unit 1002 and the signal transmission unit 1003). After notifying the currently connected terminal of the set TDD pattern, the wireless communication unit 204 changes the operation to the set TDD pattern.

In step S1208, the connection control unit 1005 transmits a connection notification to the network slice control unit 1006, and updates contents of the terminal list. After that, the connection control unit 1005 ends the processing.

Fig. 13 is a sequence chart showing an operation sequence according to the second embodiment. More specifically, Fig. 13 shows the sequence of a processing operation performed when the terminal 1101 connected to the local network is connected to the base station 604 in the local network.

The terminal 1101 establishes RRC connection to the base station 604 (F1301). After that, the terminal 1101 transmits, to the base station 604, an RRC Connection Complete message including the service type value (for example, NSSAI) of a network slice used (F1302).

Upon receiving the message, the base station 604 activates the TDD pattern setting processing (Fig. 12). In this example, the base station 604 obtains the service type value of the slice service (eMBB) used by the terminal 1101, and obtains the corresponding priority TDD pattern (F1303). In addition, the base station 604 performs processing of receiving an SIB (F1304) notified from the base station 602.

The base station 604 determines "semi-synchronous TDD pattern" as the operation TDD pattern by comparing the priority TDD pattern for the slice service used by the terminal 1101 with a TDD pattern included in the SIB (F1305).

The base station 604 notifies the terminal 1101 of the determined TDD pattern (F1306). After that, the base station 604 switches the operation TDD pattern to "semi-synchronous TDD pattern" (F1307).

With the above procedure, the base station 604 can change the TDD pattern to "synchronous TDD pattern" or "semi-synchronous TDD pattern" in accordance with the network slice used by the terminal 1101 and the TDD pattern currently operated by the base station 602. This enables the base station 604 to use the TDD pattern suitable for the service without interfering with the carrier network base station.

Note that this embodiment has explained a case where the terminal 1101 uses eMBB as a slice service. However, when using another slice service, "semi-synchronous TDD pattern" may be set.

For the sake of descriptive simplicity, this embodiment has explained a case where there is no already connected terminal in the base station 604. However, this embodiment can be applied to a case where there exists an already connected terminal, similar to the first embodiment. In this case, a TDD pattern to be used is determined based on the slice service value of the connected terminal, the slice service value of a terminal to be newly connected, and the TDD pattern of the carrier network base station.

Furthermore, this embodiment has explained a case where there is one base station operating in the adjacent frequency band but the present invention is not limited to this. For example, even if there exist a plurality of base stations operating in the adjacent frequency bands, the present invention is applicable. In this case, the TDD patterns of the plurality of base stations are obtained and a TDD pattern that does not interfere with each base station is determined.

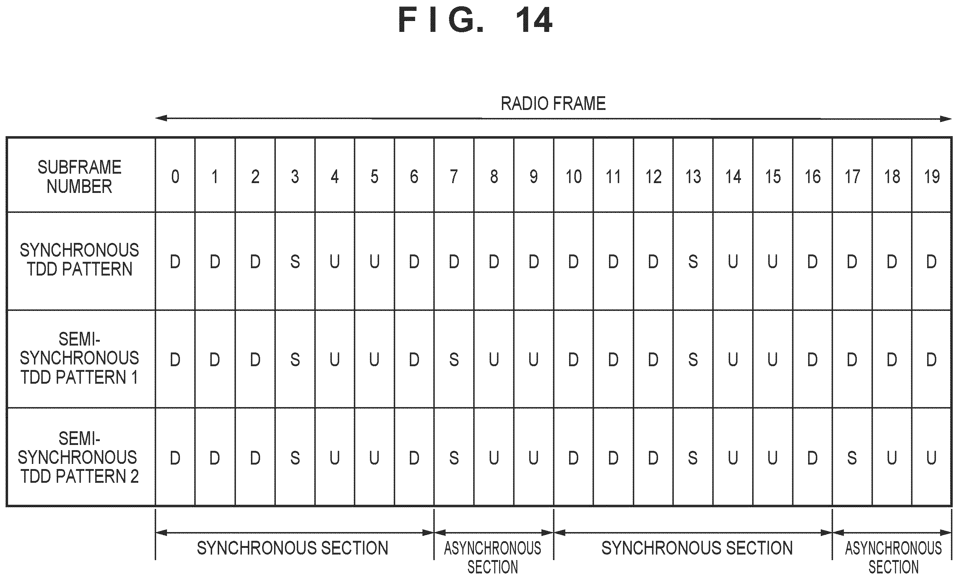

Fig. 14 is a view showing a plurality of TDD patterns serving as operation TDD patterns. For example, assume that the TDD pattern of the first carrier network base station is "synchronous TDD pattern", and the TDD pattern of the second carrier network base station is "semi-synchronous TDD pattern 1". Assume also that there exists "semi-synchronous TDD pattern 2" as a usable semi-synchronous TDD pattern.

At this time, in a case where the connection terminal designates a slice service (for example, the above-described "uplink high-speed service") that focuses on downlink communication, the local network base station sets "semi-synchronous TDD pattern 2" as a priority TDD pattern. In this case, the priority TDD pattern is used as an operation TDD pattern.

To the contrary, in a case where the connection terminal designates a slice service (for example, the above-described "eMBB") that focuses on downlink communication, the local network base station sets "synchronous TDD pattern" as a priority TDD pattern. In this case, if "synchronous TDD pattern" is selected as an operation TDD pattern, this interferes with "semi-synchronous TDD pattern 1" of the second carrier network base station in slots of subframe numbers of 8 and 9. Thus, in this case, "synchronous TDD pattern" is used as the operation TDD pattern of the local network base station.

Furthermore, similar to the first embodiment, the base station may set, as an operation TDD pattern, a TDD pattern in which subframe types in an asynchronous section are arbitrarily set. A TDD pattern not set in the storage unit 203 may be set. For example, a new semi-synchronous TDD pattern that does not interfere with the base station operating in the adjacent frequency band may be generated and used as an operation TDD pattern.

As described above, according to the second embodiment, the local network base station changes the operation TDD pattern in accordance with the network slice used by the terminal. The local network base station sets the operation TDD pattern based on the network slice used by the connection terminal and the TDD pattern currently operated by the carrier network base station. This enables the local network base station to use a more efficient TDD pattern without interfering with the carrier network base station.

### (Modification)

The functions of the network slice control unit and the TDD pattern determination unit shown in Fig. 3 or 10 may be provided in a control apparatus that controls the base station apparatus. Then, the control apparatus may perform each judgement process to control the base station apparatus based on a judgement result.

However, the protection scope of this application shall be subject to the protection scope of the claims.

## Claims

1. A communication apparatus (201) for a base station in a Time Division Duplex, TDD, communication system, and comprising:
communication means (204) for performing communication using a TDD pattern that defines uplink/downlink timings;
storage means (203, 304) for storing a plurality of TDD patterns;
determination means (307) for determining a TDD pattern to be used by the communication means (204); and
obtaining means (306) for obtaining a type of a network slice to be used by a terminal connected to the base station,
wherein the communication apparatus (201) is **characterized in that**:
the plurality of TDD patterns include a synchronous TDD pattern matching a TDD pattern used by a predetermined base station and a semi-synchronous TDD pattern obtained by replacing at least one downlink timing included in the synchronous TDD pattern by an uplink timing, and
the determination means (307) is configured to determine the TDD pattern to be used by the communication means (204) based on the type obtained by the obtaining means (306) and the plurality of TDD patterns.

2. The communication apparatus (201) according to claim 1, wherein the plurality of TDD patterns are respectively associated with different types of network slices.

3. The communication apparatus (201) according to claim 1 or 2, wherein in a case where the type obtained by the obtaining means (306) indicates Ultra-Reliable and Low Latency Communications, URLLC, the determination means is configured to select the semi-synchronous TDD pattern included in the plurality of TDD patterns.

4. The communication apparatus (201) according to any one of claims 1 to 3, wherein in a case where the type obtained by the obtaining means (306) indicates enhanced Mobile Broadband, eMBB, the determination means (307) is configured to select the synchronous TDD pattern included in the plurality of TDD patterns.

5. The communication apparatus (201) according to any one of claims 1 to 4, wherein the determination means (307) is configured to determine, as the TDD pattern to be used by the communication means (204), a new TDD pattern obtained by arbitrarily changing, with respect to the synchronous TDD pattern, an uplink and a downlink in an asynchronous section, which do not match between the synchronous TDD pattern and the semi-synchronous TDD pattern.

6. The communication apparatus (201) according to any one of claims 1 to 5, wherein
the communication apparatus (201) is configured to operate as a base station operated by a public telecommunications carrier, and
the predetermined base station is a base station operated by a public telecommunications carrier.

7. The communication apparatus (201) according to claim 1 or 2, further comprising:
pattern obtaining means for obtaining a TDD pattern used by a second base station that constructs a cell of a second frequency band adjacent to a first frequency band of a cell constructed by the communication apparatus (201),
wherein the determination means (307) is configured to determine the TDD pattern to be used by the communication means (204) based on the TDD pattern obtained by the pattern obtaining means.

8. The communication apparatus (201) according to claim 7, wherein the pattern obtaining means is configured to obtain the TDD pattern used by the second base station by receiving a notification signal notified from the second base station.

9. The communication apparatus (201) according to claim 7 or 8, further comprising:
judgement means for judging whether designated two TDD patterns cause interference in communication,
wherein in a case where the type obtained by the obtaining means indicates URLLC, the determination means (307) is configured to temporarily select the semi-synchronous TDD pattern included in the plurality of TDD patterns,
the judgement means is configured to judge whether the semi-synchronous TDD pattern and the TDD pattern obtained by the pattern obtaining means cause interference in communication, and
in a case where the judgement means judges that no interference is caused, the determination means (307) is configured to determine the semi-synchronous TDD pattern as the TDD pattern to be used by the communication means (204).

10. The communication apparatus (201) according to claim 7 or 8, further comprising:
judgement means for judging whether designated two TDD patterns cause interference in communication,
wherein in a case where the type obtained by the obtaining means (306) indicates eMBB, the determination means (307) is configured to temporarily select the synchronous TDD pattern included in the plurality of TDD patterns,
the judgement means is configured to judge whether the synchronous TDD pattern and the TDD pattern obtained by the pattern obtaining means cause interference in communication, and
in a case where the judgement means judges that no interference is caused, the determination means (307) is configured to determine the synchronous TDD pattern as the TDD pattern to be used by the communication means (204).

11. The communication apparatus (201) according to any one of claims 7 to 10, wherein
the communication apparatus (201) is configured to operate as a base station operated by a carrier other than a public telecommunications carrier, and
the predetermined base station is a base station operated by a public telecommunications carrier.

12. A method performed by a base station in a Time Division Duplex, TDD, communication system, the method comprising:
an obtaining step of obtaining a type of a network slice to be used by a terminal connected to the communication apparatus (201),
wherein the method is **characterized by**
a determination step of determining, based on the type obtained in the obtaining step and a plurality of predetermined TDD patterns, a TDD pattern to be used by the communication apparatus (201) for TDD communication,
wherein the plurality of TDD patterns include a synchronous TDD pattern matching a TDD pattern used by a predetermined base station and a semi-synchronous TDD pattern obtained by replacing at least one downlink timing included in the synchronous TDD pattern by an uplink timing.

13. The method according to claim 12, wherein the plurality of TDD patterns are respectively associated with different types of network slices.

14. The method according to claim 12 or 13, wherein in a case where the type obtained in the obtaining step indicates Ultra-Reliable and Low Latency Communications, URLLC, the semi-synchronous TDD pattern included in the plurality of TDD patterns is selected in the determining step.

15. The method according to any one of claims 12 to 14, wherein in a case where the type obtained in the obtaining step indicates enhanced Mobile Broadband, eMBB, the synchronous TDD pattern included in the plurality of TDD patterns is selected in the determining step.

16. A program for causing a computer to execute a method defined in any one of claims 12 to 15.

## Patentansprüche

1. Kommunikationsvorrichtung (201) für eine Basisstation in einem Zeitduplex-, TDD-, Kommunikationssystem, und umfassend:
eine Kommunikationseinrichtung (204) zum Durchführen von Kommunikation unter Verwendung eines TDD-Musters, das Uplink-/Downlink-Timings definiert;
eine Speichereinrichtung (203, 304) zum Speichern mehrerer TDD-Muster;
eine Bestimmungseinrichtung (307) zum Bestimmen eines TDD-Musters, welches von der Kommunikationseinrichtung (204) zu verwenden ist; und
eine Erhalteeinrichtung (306) zum Erhalten eines Typs eines Netzwerk-Slices, welches von einem mit der Basisstation verbundenen Endgerät zu verwenden ist,
wobei die Kommunikationsvorrichtung (201) **dadurch gekennzeichnet ist, dass**:
die mehreren TDD-Muster ein synchrones TDD-Muster enthalten, das mit einem von einer vorbestimmten Basisstation verwendeten TDD-Muster übereinstimmt, und ein halbsynchrones TDD-Muster enthalten, das durch Ersetzen mindestens eines im synchronen TDD-Muster enthaltenen Downlink-Timings durch ein Uplink-Timing erhalten wird, und
die Bestimmungseinrichtung (307) konfiguriert ist, das von der Kommunikationseinrichtung (204) zu verwendende TDD-Muster basierend auf dem von der Erhalteeinrichtung (306) erhaltenen Typ und den mehreren TDD-Mustern zu bestimmen.

2. Kommunikationsvorrichtung (201) nach Anspruch 1, wobei die mehreren TDD-Muster jeweils verschiedenen Typen Netzwerk-Slices zugeordnet sind.

3. Kommunikationsvorrichtung (201) nach Anspruch 1 oder 2, wobei in einem Fall, in welchem der von der Erhalteeinrichtung (306) erhaltene Typ Ultra-Reliable and Low Latency Communications, URLLC, angibt, die Bestimmungseinrichtung konfiguriert ist, das in den mehreren TDD-Mustern enthaltene halbsynchrone TDD-Muster auszuwählen.

4. Kommunikationsvorrichtung (201) nach einem der Ansprüche 1 bis 3, wobei in einem Fall, in welchem der von der Erhalteeinrichtung (306) erhaltene Typ Enhanced Mobile Broadband, eMBB, angibt, die Bestimmungseinrichtung (307) konfiguriert ist, das in den mehreren TDD-Mustern enthaltene synchrone TDD-Muster auszuwählen.

5. Kommunikationsvorrichtung (201) nach einem der Ansprüche 1 bis 4, wobei die Bestimmungseinrichtung (307) konfiguriert ist, als das von der Kommunikationseinrichtung (204) zu verwendende TDD-Muster ein neues TDD-Muster zu bestimmen, das durch willkürliches Ändern eines Uplinks und eines Downlinks in einem asynchronen Abschnitt, die nicht zwischen dem synchronen TDD-Muster und dem halbsynchronen TDD-Muster übereinstimmen, in Bezug auf das synchrone TDD-Muster erhalten wird.

6. Kommunikationsvorrichtung (201) nach einem der Ansprüche 1 bis 5, wobei
die Kommunikationsvorrichtung (201) konfiguriert ist, als eine von einem öffentlichen Telekommunikationsträger betriebene Basisstation zu arbeiten, und
die vorbestimmte Basisstation eine von einem öffentlichen Telekommunikationsträger betriebene Basisstation ist.

7. Kommunikationsvorrichtung (201) nach Anspruch 1 oder 2, ferner umfassend:
eine Mustererhalteeinrichtung zum Erhalten eines TDD-Musters, das von einer zweiten Basisstation verwendet wird, die eine Zelle eines zweiten Frequenzbands benachbart zu einem ersten Frequenzband einer von der Kommunikationsvorrichtung (201) aufgebauten Zelle aufbaut,
wobei die Bestimmungseinrichtung (307) konfiguriert ist, das von der Kommunikationseinrichtung (204) zu verwendende TDD-Muster basierend auf dem von der Mustererhalteeinrichtung erhaltenen TDD-Muster zu bestimmen.

8. Kommunikationsvorrichtung (201) nach Anspruch 7, wobei die Mustererhalteeinrichtung konfiguriert ist, das von der zweiten Basisstation verwendete TDD-Muster durch Empfangen eines von der zweiten Basisstation mitgeteilten Mitteilungssignals zu erhalten.

9. Kommunikationsvorrichtung (201) nach Anspruch 7 oder 8, ferner umfassend:
eine Beurteilungseinrichtung zum Beurteilen, ob festgelegte zwei TDD-Muster eine Interferenz in der Kommunikation verursachen,
wobei in einem Fall, in welchem der von der Erhalteeinrichtung erhaltene Typ URLLC angibt, die Bestimmungseinrichtung (307) konfiguriert ist, das in den mehreren TDD-Mustern enthaltene halbsynchrone TDD-Muster zeitweilig auszuwählen,
die Beurteilungseinrichtung konfiguriert ist, zu beurteilen, ob das halbsynchrone TDD-Muster und das von der Mustererhalteeinrichtung erhaltene TDD-Muster eine Interferenz in der Kommunikation verursachen, und
in einem Fall, in welchem die Beurteilungseinrichtung beurteilt, dass keine Interferenz verursacht wird, die Bestimmungseinrichtung (307) konfiguriert ist, das halbsynchrone TDD-Muster als das von der Kommunikationseinrichtung (204) zu verwendende TDD-Muster zu bestimmen.

10. Kommunikationsvorrichtung (201) nach Anspruch 7 oder 8, ferner umfassend:
eine Beurteilungseinrichtung zum Beurteilen, ob festgelegte zwei TDD-Muster eine Interferenz in der Kommunikation verursachen,
wobei in einem Fall, in welchem der von der Erhalteeinrichtung (306) erhaltene Typ eMBB angibt, die Bestimmungseinrichtung (307) konfiguriert ist, das in den mehreren TDD-Mustern enthaltene synchrone TDD-Muster zeitweilig auszuwählen,
die Beurteilungseinrichtung konfiguriert ist, zu beurteilen, ob das synchrone TDD-Muster und das von der Mustererhalteeinrichtung erhaltene TDD-Muster eine Interferenz in der Kommunikation verursachen, und
in einem Fall, in welchem die Beurteilungseinrichtung beurteilt, dass keine Interferenz verursacht wird, die Bestimmungseinrichtung (307) konfiguriert ist, das synchrone TDD-Muster als das von der Kommunikationseinrichtung (204) zu verwendende TDD-Muster zu bestimmen.

11. Kommunikationsvorrichtung (201) nach einem der Ansprüche 7 bis 10, wobei
die Kommunikationsvorrichtung (201) konfiguriert ist, als eine von einem anderen Träger als einem öffentlichen Telekommunikationsträger betriebene Basisstation zu arbeiten, und
die vorbestimmte Basisstation eine von einem öffentlichen Telekommunikationsträger betriebene Basisstation ist.

12. Verfahren, das von einer Basisstation in einem Zeitduplex-, TDD-, Kommunikationssystem durchgeführt wird, wobei das Verfahren umfasst:
einen Erhalteschritt zum Erhalten eines Typs eines Netzwerk-Slices, welches von einem mit der Kommunikationsvorrichtung (201) verbundenen Endgerät zu verwenden ist,
wobei das Verfahren **gekennzeichnet ist durch**
einen Bestimmungsschritt zum Bestimmen, basierend auf dem im Erhalteschritt erhaltenen Typ und mehreren vorbestimmten TDD-Mustern, eines TDD-Musters, welches von der Kommunikationsvorrichtung (201) zur TDD-Kommunikation zu verwenden ist,
wobei die mehreren TDD-Muster ein synchrones TDD-Muster enthalten, das mit einem von einer vorbestimmten Basisstation verwendeten TDD-Muster übereinstimmt, und ein halbsynchrones TDD-Muster enthalten, das durch Ersetzen mindestens eines im synchronen TDD-Muster enthaltenen Downlink-Timings durch ein Uplink-Timing erhalten wird.

13. Verfahren nach Anspruch 12, wobei die mehreren TDD-Muster jeweils verschiedenen Typen Netzwerk-Slices zugeordnet sind.

14. Verfahren nach Anspruch 12 oder 13, wobei in einem Fall, in welchem der im Erhalteschritt erhaltene Typ Ultra-Reliable and Low Latency Communications, URLLC, angibt, das in den mehreren TDD-Mustern enthaltene halbsynchrone TDD-Muster im Bestimmungsschritt ausgewählt wird.

15. Verfahren nach einem der Ansprüche 12 bis 14, wobei in einem Fall, in welchem der im Erhalteschritt erhaltene Typ Enhanced Mobile Broadband, eMBB, angibt, das in den mehreren TDD-Mustern enthaltene synchrone TDD-Muster im Bestimmungsschritt ausgewählt wird.

16. Programm zum Veranlassen eines Computers, ein in einem der Ansprüche 12 bis 15 definiertes Verfahren auszuführen.

## Revendications

1. Appareil de communication (201) pour une station de base dans un système de communication duplex à répartition dans le temps, TDD, et comprenant :
un moyen de communication (204) pour effectuer une communication à l'aide d'un motif de TDD qui définit des synchronisations de liaison montante/liaison descendante ; un moyen de stockage (203, 304) pour stocker une pluralité de motifs de TDD ;
un moyen de détermination (307) pour déterminer un motif de TDD à utiliser par le moyen de communication (204) ; et un moyen d'obtention (306) pour obtenir un type de tranche réseau à utiliser par un terminal connecté à la station de base,
dans lequel l'appareil de communication (201) est **caractérisé en ce que** :
la pluralité de motifs de TDD incluent un motif de TDD synchrone correspondant à un motif de TDD utilisé par une station de base prédéterminée et un motif de TDD semi-synchrone obtenu en remplaçant au moins une synchronisation de liaison descendante incluse dans le motif de TDD synchrone par une synchronisation de liaison montante, et
le moyen de détermination (307) est configuré pour déterminer le motif de TDD à utiliser par le moyen de communication (204) sur la base du type obtenu par le moyen d'obtention (306) et de la pluralité de motifs de TDD.

2. Appareil de communication (201) selon la revendication 1, dans lequel la pluralité de motifs de TDD sont respectivement associés à différents types de tranches de réseau.

3. Appareil de communication (201) selon la revendication 1 ou 2, dans lequel dans un cas où le type obtenu par le moyen d'obtention (306) indique des communications ultra-fiables et à faible latence, URLLC, le moyen de détermination est
configuré pour sélectionner le motif de TDD semi-synchrone inclus dans la pluralité de motifs de TDD.

4. Appareil de communication (201) selon l'une quelconque des revendications 1 à 3, dans lequel dans un cas où le type obtenu par le moyen d'obtention (306) indique une large bande mobile améliorée, eMBB, le moyen de détermination (307) est configuré pour sélectionner le motif de TDD synchrone inclus dans la pluralité de motifs de TDD.

5. Appareil de communication (201) selon l'une quelconque des revendications 1 à 4, dans lequel le moyen de détermination (307) est configuré pour déterminer, en tant que motif de TDD à utiliser par le moyen de communication (204), un nouveau motif de TDD obtenu en modifiant arbitrairement, par rapport au motif de TDD synchrone, une liaison montante et une liaison descendante dans une section asynchrone, qui ne correspondent pas entre le motif de TDD synchrone et le motif de TDD semi-synchrone.

6. Appareil de communication (201) selon l'une quelconque des revendications 1 à 5, dans lequel
l'appareil de communication (201) est configuré pour fonctionner comme une station de base exploitée par un opérateur public de télécommunications, et
la station de base prédéterminée est une station de base exploitée par un opérateur public de télécommunications.

7. Appareil de communication (201) selon la revendication 1 ou 2, comprenant en outre :
un moyen d'obtention de motif pour obtenir un motif de TDD utilisé par une seconde station de base qui construit une cellule d'une seconde bande de fréquences adjacente à une première bande de fréquences d'une cellule construite par l'appareil de communication (201), dans lequel le moyen de détermination (307) est configuré pour déterminer le motif de TDD à utiliser par le moyen de communication (204) sur la base du motif de TDD obtenu par le moyen d'obtention de motif.

8. Appareil de communication (201) selon la revendication 7, dans lequel le moyen d'obtention de motif est configuré pour obtenir le motif de TDD utilisé par la seconde station de base en recevant un signal de notification notifié par la seconde station de base.

9. Appareil de communication (201) selon la revendication 7 ou 8, comprenant en outre :
un moyen de jugement permettant de juger si deux motifs de TDD désignés provoquent des interférences dans la communication,
dans lequel dans un cas où le type obtenu par le moyen d'obtention indique des URLLC, le moyen de détermination (307) est configuré pour sélectionner temporairement le motif de TDD semi-synchrone inclus dans la pluralité de motifs de TDD,
le moyen de jugement est configuré pour juger si le motif de TDD semi-synchrone et le motif de TDD obtenu par le moyen d'obtention de motif provoquent des interférences dans la communication, et
dans un cas où le moyen de jugement juge qu'aucune interférence n'est provoquée, le moyen de détermination (307) est configuré pour déterminer le motif de TDD semi-synchrone comme motif de TDD à utiliser par le moyen de communication (204).

10. Appareil de communication (201) selon la revendication 7 ou 8, comprenant en outre :
un moyen de jugement permettant de juger si deux motifs de TDD désignés provoquent des interférences dans la communication,
dans lequel dans un cas où le type obtenu par le moyen d'obtention (306) indique une eMBB, le moyen de détermination (307) est configuré pour sélectionner temporairement le motif de TDD synchrone inclus dans la pluralité de motifs de TDD,
le moyen de jugement est configuré pour juger si le motif de TDD synchrone et le motif de TDD obtenu par le moyen d'obtention de motif provoquent des interférences dans la communication, et
dans un cas où le moyen de jugement juge qu'aucune interférence n'est provoquée, le moyen de détermination (307) est configuré pour déterminer le motif de TDD synchrone comme le motif de TDD à utiliser par le moyen de communication (204).

11. Appareil de communication (201) selon l'une quelconque des revendications 7 à 10, dans lequel
l'appareil de communication (201) est configuré pour fonctionner comme une station de base exploitée par un opérateur autre qu'un opérateur public de télécommunications, et
la station de base prédéterminée est une station de base exploitée par un opérateur public de télécommunications.

12. Procédé réalisé par une station de base dans un système de communication duplex à répartition dans le temps, TDD, le procédé comprenant :
une étape d'obtention consistant à obtenir un type d'une tranche de réseau à utiliser par un terminal connecté à l'appareil de communication (201),
dans lequel le procédé est **caractérisé par** une étape de détermination consistant à déterminer, sur la base du type obtenu à
l'étape d'obtention et d'une pluralité de motifs de TDD prédéterminés, un motif de TDD à utiliser par l'appareil de communication (201) pour la communication TDD,
dans lequel la pluralité de motifs de TDD incluent un motif de TDD synchrone correspondant à un motif de TDD utilisé par une station de base prédéterminée et un motif de TDD semi-synchrone obtenu en remplaçant au moins une synchronisation de liaison descendante incluse dans le motif de TDD synchrone par une synchronisation de liaison montante.

13. Procédé selon la revendication 12, dans lequel la pluralité de motifs de TDD sont respectivement associés à différents types de tranches de réseau.

14. Procédé selon la revendication 12 ou 13, dans lequel dans un cas où le type obtenu à l'étape d'obtention indique des communications ultra-fiables et à faible latence, URLLC, le motif de TDD semi-synchrone inclus dans la pluralité de motifs de TDD est sélectionné à l'étape de détermination.

15. Procédé selon l'une quelconque des revendications 12 à 14, dans lequel dans un cas où le type obtenu à l'étape d'obtention indique une large bande mobile améliorée, eMBB, le motif de TDD synchrone inclus dans la pluralité de motifs de TDD est sélectionné à l'étape de détermination.

16. Programme pour amener un ordinateur à exécuter un procédé selon l'une quelconque des revendications 12 à 15.
